(19) Europäisches Patentamt
European Patent Office
Office européen des brevets

(11) **EP 4 254 385 B1**

(12) **EUROPEAN PATENT SPECIFICATION**

(45) Date of publication and mention
of the grant of the patent:
**04.09.2024 Bulletin 2024/36**

(21) Application number: **22165039.3**

(22) Date of filing: **29.03.2022**

(51) International Patent Classification (IPC):
*G08G 1/16* (2006.01)   *G06V 20/58* (2022.01)
*B60W 30/08* (2012.01)   *B60W 30/095* (2012.01)
*B60W 50/14* (2020.01)   *B60Q 1/50* (2006.01)
*B60Q 5/00* (2006.01)   *B60Q 9/00* (2006.01)
*B62J 6/24* (2020.01)   *B62J 27/00* (2020.01)
*B62J 50/22* (2020.01)

(52) Cooperative Patent Classification (CPC):
**G08G 1/166; B60W 30/095; B60W 30/0956;
B60W 50/14; B62J 27/00; B62J 50/22;
G06V 20/58; G08G 1/167;** B60Q 9/008;
B60W 2300/36; B60W 2420/403

(54) **METHOD FOR ASSESSING A RISK OF INTERFERENCE, DATA PROCESSING DEVICE, SYSTEM FOR ASSESSING A RISK OF INTERFERENCE, AND BICYCLE ASSEMBLY**

VERFAHREN ZUM BEWERTEN EINES INTERFERENZRISIKOS, DATENVERARBEITUNGSVORRICHTUNG, SYSTEM ZUM BEWERTEN EINES INTERFERENZRISIKOS UND FAHRRADANORDNUNG

PROCÉDÉ PERMETTANT D'ÉVALUER UN RISQUE D'INTERFÉRENCE, DISPOSITIF DE TRAITEMENT DE DONNÉES, SYSTÈME POUR ÉVALUER UN RISQUE D'INTERFÉRENCE, ET ENSEMBLE BICYCLETTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.10.2023 Bulletin 2023/40**

(73) Proprietor: **Alps Alpine Europe GmbH
85716 Unterschleissheim (DE)**

(72) Inventor: **GALOS, Andreas
70771 Leinfelden-Echterdingen (DE)**

(74) Representative: **Maiwald GmbH
Engineering
Elisenhof
Elisenstrasse 3
80335 München (DE)**

(56) References cited:
**US-A1- 2015 228 066    US-A1- 2019 210 681
US-A1- 2020 094 821    US-A1- 2021 012 663
US-A1- 2022 073 068**

EP 4 254 385 B1

**Description**

The invention relates to a method for assessing a risk of interference between a first road user, especially a cyclist, and at least one second road user being located behind the first road user.

Furthermore, the invention is directed to a data processing device for assessing a risk of interference between a first road user, especially a cyclist, and at least one second road user being located behind the first road user.

Additionally, the invention relates to a system for assessing a risk of interference between a first road user, especially a cyclist, and at least one second road user being located behind the first road user.

The invention is also directed to a bicycle assembly comprising a bicycle and a system as described above.

In the present context, an interference between road users is to be understood as an undesired influence of one road user, e.g. the second road user, on the other road user, e.g. the first road user. A simple example of an interference is a collision between the road users. However, also an entry into a safety zone of the respective other road user is an interference since the affected road user may perform an evasive maneuver due to such an entry. An interference may also be called a hazard or hazard event. A situation in which an interference takes place may be designated as a hazardous situation.

Interferences being caused by road users being located in a back or on a rear side with respect to a forward travelling direction present a comparatively high risk since road users usually orient their viewing direction along the travelling direction. Consequently, seeing and observing road users being located on a rear side is difficult or impossible depending on a current traffic situation. Such situations are especially relevant for cyclists since they are unprotected as compared to road users such as cars and trucks.

This has led to the development of warning devices being configured for warning a road user of other road users which are located on a rear side. Such devices are especially known for bicycles. If a road user being located on the rear side is detected, a warning is issued which can be an audio warning, a visual warning or a combined audio warning and visual warning.

A system for vehicle monitoring and alerting which can be used on a bicycle is for example known from US 2021/0012663 A1. Further warning devices being configured for warning a road user of other road users which are located on a rear side are known from US 2015/228066 A1, US 2019/210681 A1 and US 2022/073068 A1.

The problem to be solved by the present invention is to improve such warning devices and corresponding methods.

The problem is solved by a method for assessing a risk of interference between a first road user, especially a cyclist, and at least one second road user being located behind the first road user. The method comprises:

- receiving at least one image taken from a position of the first road user showing a traffic situation including the at least one second road user,
- analyzing the received image and deducting a current risk level indicator, wherein the current risk level indicator describes a current risk of interference between the first road user and the at least one second road user,
- determining a current risk level threshold, wherein the current risk level threshold is a function of a set of historic risk level indicators,
- comparing the current risk level indicator and the current risk level threshold, and
- triggering a notification for the first road user if the current risk level indicator exceeds the current risk level threshold.

The method uses at least one image taken from a position of the first road user as an input. Preferably, not only one image but rather a set or a stream of images is received. A current risk level indicator is generated by analyzing the at least one image. In this context, the risk level indicator describes a current risk of interference, i.e. a risk of interference prevailing at the time of analyzing the at least one image. The steps of receiving the at least one image and analyzing the received image may be summarized as monitoring a rearward traffic situation. The current risk level threshold describes the risk level threshold that is applicable at the time of executing the method. Thus, the current risk level threshold is variable and may change from one point in time to another point in time. This is due to the fact that at a later point in time, additional and/or different historic risk level indicators may be available for determining the corresponding current risk level threshold. The current risk level threshold may be provided automatically, i.e. without the interaction of a user. In simplified words, the current risk level threshold is determined based on a risk level history. Consequently, the current risk level threshold may be high if the set of historic risk level indicators comprises predominantly high risk level indicators. This may be the case if the method is performed in an environment with heavy traffic, e.g. on a city road. In such a situation, due to the comparatively high current risk level threshold, only comparatively high current risk level indicators will lead to a notification of the first road user. The current risk level threshold may be low if the set of historic risk level indicators comprises predominantly low risk level indicators. This may be the case if the method is performed in an environment with little traffic, e.g. on a country road. In such a situation, due to the comparatively low current risk level threshold, also comparatively low current risk level indicators will lead to a notification of the first road user. Altogether, the notifications are adaptable to a general risk level prevailing in the environment in which the method is performed. In each of the varying situations an appropriate and effective notification can be provided to the first road user thereby enhancing road safety.

The effects and advantages of the method according to the present invention will become especially clear when considering the following example in which a method operating with a fixed, pre-set risk level threshold is compared to the method according to the invention. The fixed, pre-set risk level threshold may be suitable for generating a reasonable amount of notifications with a reasonable forecast in a country road setting. If the same method with the same pre-set risk level threshold is executed in a heavy traffic situation, e.g. on a city road, the first road user will receive a multitude of notifications, i.e. too many. Moreover, the notifications may be too early. The first road user will be overburdened such that the first road user is not able to distinguish vital notifications from notifications just reflecting the general risk level in the heavy traffic situation. In an alternative, the fixed, pre-set risk level threshold may be suitable for generating a reasonable amount of notification with a reasonable forecast in a heavy traffic situation. If the same method with the same pre-set risk level threshold is executed in a country road setting with little traffic, the first road user will be notified only in situations of comparatively high risk. Thus, there may be too few notifications. Moreover, the notifications may be provided too late. This may provide undue stress on the first road user since he or she has to react very quickly to this notification. The undue stress may compensate the benefits of the notification such that overall road safety is not improved. When using the method according to the present invention, these problems are solved and the first road user will neither be overburdened in the heavy traffic situation nor be unduly stressed in the country road situation.

The triggered notification may be a visual notification, an audio notification or a combined visual notification and audio notification.

The notification may comprise a warning.

According to a variant, the method additionally comprises calculating a difference between the current risk level indicator and the current risk level threshold. Depending on the magnitude of the difference, the current risk level indicator may be classified, e.g. as a high risk, a middle risk or a low risk. The notification for the road user may be a function of the classification of the current risk level indicator. In case of a visual notification, a color may change. In an example, yellow color may be used for a low risk, orange color for a middle risk and red color for a high risk. In a case in which the notification is audible, the degree of loudness may be adapted in accordance with the classification of the risk. It is also possible to define a frequency or a frequency band of the notification as a function of the classification.

It is noted that the above explanations relate to one second road user only. Of course, traffic situations may exist in which more than one second road user is located behind the first road user. In such situations, the method is performed for each of the second road users. This means that a current risk level indicator is generated for each of the second road users. In a case in which a plurality of current risk level indicators exceed the current risk level threshold, also a plurality of notifications is triggered.

According to an embodiment, analyzing the received image comprises estimating at least one of a time to pass the first road user, a passing distance and a passing speed of the at least one second road user based on the received image. The estimated time to pass is the estimated time until the second road user passes by first road user. The estimated passing distance is the estimated lateral distance between the first road user and the second road user when the second road user passes by the first road user. The estimated passing speed is the estimated relative velocity between the first road user and the second road user when the second road user is passing by the first road user. These parameters are well-suitable for deducting a current risk level indicator since they all have a major influence on the risk of interference.

The risk level indicator may correspond to a weighted product or a weighted sum of the estimated time to pass, the estimated passing distance and the estimated passing speed. In a weighted product each of the parameters mentioned before is multiplied with a corresponding weight in a first step. In a second step, the weighted parameters are multiplied with one another. In a weighted sum, each of the parameters mentioned before is multiplied with a corresponding weight in a first step. In a second step, the sum of the weighted parameters is calculated. In both cases, the weights can be pre-set. According to a variant, the weighted parameters may be normalized before being multiplied or summed up. The weighted product and the weighted sum both are simple, but realistic models of the influence of the parameters mentioned above on the risk level. Consequently, the risk level may be easily and accurately calculated using the weighted product or the weighted sum.

In this context, at least one of a first weight for weighting the estimated time to pass, a second weight for weighting the estimated passing distance, and a third weight for weighting the estimated passing speed is a function of a driving behavior of the first road user or a user setting. In the latter case, a user may set at least one of the first weight, the second weight and the third weight according to his or her preferences. Thus, a user can decide an order according to which the above mentioned parameters influence the current risk level. A driving behavior may be described by at least one of a current position of the first road user, a current speed of the first road user, a historic speed of the first road user, a current acceleration of the road user, and a historic acceleration of the road user. The historic parameters may for example be provided in the form of a historic average or a historic maximum. In the case of an acceleration, one may distinguish longitudinal and lateral acceleration. When determining at least one of the first weight, the second weight and the third weight as a function of a driving behavior, the at least one of the first weight, the second weight and the third weight may be determined as function of at least one of the parameters describing the driving behavior. In this context, the weights for a rather courageous or aggressive first road user may be different from the weights for a rather cautious first road user. Thus, each of these road user types will be provided with appropriate notifications.

In an example, the method further comprises triggering the notification for the first road user if the estimated time to pass is lower than a time threshold or if the estimated passing distance is lower than a distance threshold or if the estimated passing speed exceeds a speed threshold. It is noted that in this context, the notification is triggered independent from the current risk level indicator. Such a functionality may be designated as an override functionality. Thus, a notification is triggered if the second road user passed by the first road user in a comparatively short estimated time, at a comparatively low estimated distance of with a comparatively high estimated speed. In an example, the time threshold is between 1 second and 5 seconds, e.g. 2 seconds, the distance threshold is between 0 meters and 0,5 meters, e.g. 0,1 meters or 0,2 meters and the speed threshold is between 20 km/h and 70km/h, e.g. 30 km/h or 50 km/h. Such an override functionality further enhances road safety.

At least one of the time threshold, the distance threshold, and the speed threshold may be a function of a driving behavior of the first road user or a user setting. In the latter case, as before, a user may set at least one of the thresholds according to his or her preferences. A driving behavior may be described by the same parameters that have been described in connection with the at least one of the first weight, the second weight and the third weight. When determining at least one of the thresholds as a function of a driving behavior, the at least one threshold may be determined as function of at least one of the parameters describing the driving behavior. In this context, the thresholds for a rather courageous or aggressive first road user may be different from the weights for a rather cautious first road user. More generally speaking, the sensitivity of the override functionality may be adapted. Thus, each of these road user types will be provided with appropriate notifications caused by the override functionality.

According to a variant, the current risk level threshold corresponds to an average of a set of historic risk level indicators over a defined time window in the past. Such an average may be designated as a floating average. The time window in the past may be for example 5 seconds to 40 seconds, e.g. 10 seconds, 20 seconds or 30 seconds. Such a risk level threshold is highly adaptive with respect to changing traffic conditions, more precisely highly adaptive with respect to a changing general risk level. The average may also be a weighted average. In this variant, older risk level indicators may have a lower weight than younger risk level indicators. Thus, the recent past is more relevant when calculating the risk level threshold than the earlier past. In all of these variants, the current risk level threshold leads to appropriate notifications for the prevailing traffic situation.

Alternatively, the current risk level threshold corresponds to an average of a set of historic risk level indicators corresponding to a defined number of past notification events. As before, such an average may be called a floating average. However, now only the risk level indicators which have led to a notification event are considered. The remaining risk level indicators are not used for calculating the average. In a variant, the average may be a weighted average. This means that for example older risk level indicators may have a lower weight than younger risk level indicators. Thus, the recent past is more relevant when calculating the risk level threshold than the earlier past. Overall, the current risk level threshold leads to appropriate notifications for the prevailing traffic situation.

Preferably, analyzing the received image comprises applying a machine vision technique. Thus, the image may be analyzed automatically within a short time and with a high reliability. As a consequence thereof, the current risk level indicator may be deducted automatically. Due to the accurate nature of machine vision techniques, also the deducted risk level indicator is accurate. It is noted that in a case in which more than one second road users are shown in the at least one image, a current risk level indicator is deducted for each of these second road users.

In an example, applying a machine vision technique comprises applying a segmentation technique. This means that the received at least one image is segmented before the current risk level indicator is deducted. In a preferred variant, one segment is generated for each second road user. The remaining segments of the received image are not relevant for generating the current risk level indicator and, thus, may be ignored. This enhances the computational efficiency of the machine vision technique.

According to a variant, a trained convolutional neural network is used for performing the segmentation. This neural network may be trained with images showing vehicles, e.g. cars and trucks, which are the most relevant second road users. Such training data is publicly available.

According to another variant, the segmentation is done by generating a differential image. This means that a difference is calculated between two temporally sequential images. The difference just shows the portions of the image where objects being shown in the image have moved. Thus, a segment may be defined for each moving object. Generating a differential image is a very simple and computationally efficient method for generating segments comprising moving objects.

The machine vision technique may comprise an optical flow technique. The optical flow technique is known as such. This technique uses a set of temporally sequential images which may be designated as frames. Each pixel of each of these images is either defined by a brightness value and a color value or by a brightness value, a red color value, a green color value, and a blue color value. The optical flow technique searches for pixels having the same characteristic, i.e. the same values as explained above, in subsequent images. Subsequently, a path or a trajectory of each pixel may be determined over the set of temporally sequential images. In a first application scenario, the optical flow technique may be used for segmenting the images. The optical flow technique is especially performant with respect to the detection of moving objects in a set of images. Consequently, using the optical flow technique, segments comprising second road users may be generated in an efficient and reliable manner. In a second application scenario, the trajectories or paths are used for deducting the current risk level indicator. For example, the paths or trajectories are extrapolated such that a time to pass, a passing speed and a passing distance may be estimated. Thus, also the current risk level indicator may be determined with high efficiency, accuracy and reliability. It is noted that the optical flow technique may be used for both segmentation and deduction of the current risk level indicator. In such a case, only the segments comprising a second road user may be considered for deducting the current risk level indicator. It is additionally noted that the optical flow technique is very tolerant with respect to color and brightness. This means that the optical flow technique is also very tolerant with respect to camera interference and artefacts. Thus, the optical flow technique produces reliable results independent from light conditions which may be influenced for example by weather conditions.

According to a variant, the method comprises providing the received image to the first road user. Consequently, the first road user is able to observe the rear traffic. This functionality can be designated as a digital rear view mirror. The notifications may be provided as an overlay over the image or in combination with the image. In such a configuration the first road user may perceive the current risk level very easily and quickly. This further enhances road safety.

The method according to the invention may be computer-implemented.

In this context, the method may be implemented in software or in hardware, or in software and hardware. Further, the method may be carried out by computer program instructions running on means that provide data processing functions. The data processing means may be a suitable computing means, such as a mobile electronic device or an electronic control module, which may also be a distributed computer system. The data processing means or the computer, respectively, may comprise one or more of a processor, a memory, a data interface, or the like.

Moreover, the problem is solved by a data processing device for assessing a risk of interference between a first road user, especially a cyclist, and at least one second road user being located behind the first road user. The data processing device comprises means configured for carrying out the method according to the invention. Such a data processing devices is, thus, configured to provide notifications for the first road user which are adaptable to a general risk level prevailing in the environment in which the data processing device is used. An appropriate and effective notification of the first road user enhances road safety.

The data processing device may be a component of a smart phone, a tablet, a smart watch or any other portable electronic device. In another alternative, the data processing device is a specific stand-alone device which may be mounted on or at the first road user. Thus, the method according to the invention may be executed on each of these devices.

Furthermore, the problem is solved by a system for assessing a risk of interference between a first road user, especially a cyclist, and at least one second road user being located behind the first road user. The system comprises a data processing device according to the invention.

Moreover, the system comprises an image capturing device being configured to capture at least one image from a position of the first road user showing a traffic situation including the at least one second road user. Furthermore, the system comprises a notification interface configured to provide a notification for the first road user. The image capturing device is communicatively connected to the data processing device and the notification interface is communicatively connected to the data processing device. Using such a system, notifications about a risk of interference resulting from the second road user can be provided to the first road user. The notifications are adaptable to a general risk level prevailing in the environment in which the system is used. Consequently, the notifications are appropriate and effective for the respective environment. This enhances road safety. The system according to the invention may be called a situational risk assessment system for rear traffic monitoring or a rear traffic alert system.

According to an embodiment, the system may further comprise an image interface being configured for providing an image captured by the image capturing device to the first road user. The image interface may be communicatively connected to at least one of the image capturing device and the data processing device. Consequently, the system offers a rearview mirror functionality to the first road user. The first road user, thus, can observe the rear traffic independent from a risk of interference and independent from a notification. The notifications can be provided as an overlay over the image or in combination with the image. In such a configuration the first road user may perceive the current risk level very easily and quickly. This further enhances road safety.

Additionally, the problem is solved by a bicycle assembly comprising a bicycle and a system according to the invention. The system is mounted on the bicycle such that the image capturing device is facing rearwards. The image capturing device may be mounted on a saddle post or on a rear portion of the bicycle's frame. Thus, when using such a bicycle assembly, notifications are provided which are adaptable to a general risk level prevailing in the environment in which the bicycle assembly is located. An appropriate and effective notification enhances road safety.

It is noted that the effects and advantages that have been explained for one of the method according to the invention, the data processing device according to the invention, the system according to the invention and the bicycle assembly according to the invention apply mutatis mutandis to all the other aspects of the invention.

Examples of the present invention will be described in the following with reference to the following drawings.

Figure 1   shows a traffic situation including a bicycle assembly according to the invention, wherein the bicycle assembly comprises system according to the invention for assessing a risk of interference having a data processing device according to the invention being able to carry out a method according to the invention,

Figure 2   shows a portion of the bicycle assembly of Figure 1 in more detail,

Figure 3   shows the system for assessing a risk of interference of Figures 1 and 2 in more detail,

Figure 4   shows an alternative system for assessing a risk of interference,

Figure 5   shows steps of the method for assessing a risk of interference, and

Figure 6   shows examples of visual notifications.

The figures are merely schematic representations and serve only to illustrate examples of the disclosure. Identical or equivalent elements are in principle provided with the same reference signs.

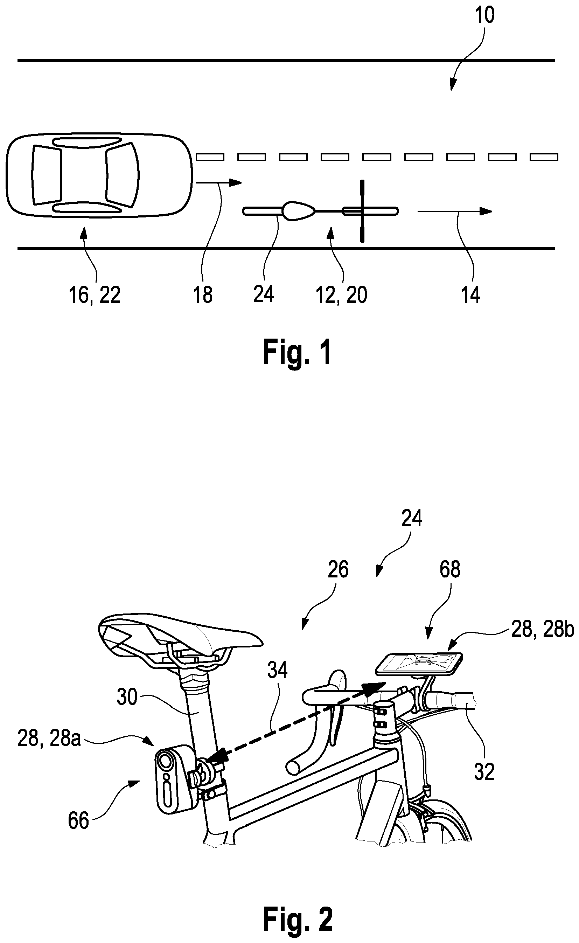

Figure 1 shows a traffic situation wherein on a road 10 a first road user 12 travels along a corresponding first travelling direction 14 and a second road user 16 travels along a corresponding second travelling direction 18.

With respect to the first travelling direction 14, the second road user 16 is located behind the first road user 12. It is noted that this relative orientation of the first road user 12 and the second road user 16 is independent from the fact whether at least one of the first road user 12 and the second road user 16 is moving or not.

In the examples described in connection with the figures, the first road user 12 is a cyclist 20. The second road user 16 is a car 22.

In more detail, the first road user 18 is formed by a person which is omitted in the figures for the ease of representation which is using a bicycle assembly 24.

The bicycle assembly 24 is shown in more detail in Figure 2.

The bicycle assembly 24 comprises a bicycle 26 which is only partly shown in Figure 2 and a system 28 for assessing a risk of interference between the first road user 12, i.e. the cyclist 20, and the second road user 16, i.e. the car 22, being located behind the first road user 12.

The system 28 comprises two components 28a, 28b.

In the present example, a first component 28a is mounted on a seat post 30 of the bicycle 26 such that it faces rearwards, i.e. in an orientation opposite to the first travelling direction 14.

A second component 28b is mounted on a handle bar 32 of the bicycle 26 such that it is easily visible by the person riding the bicycle 26.

The first component 28a and the second component 28b are connected by a wireless data connection 34 illustrated by an arrow in Figure 2.

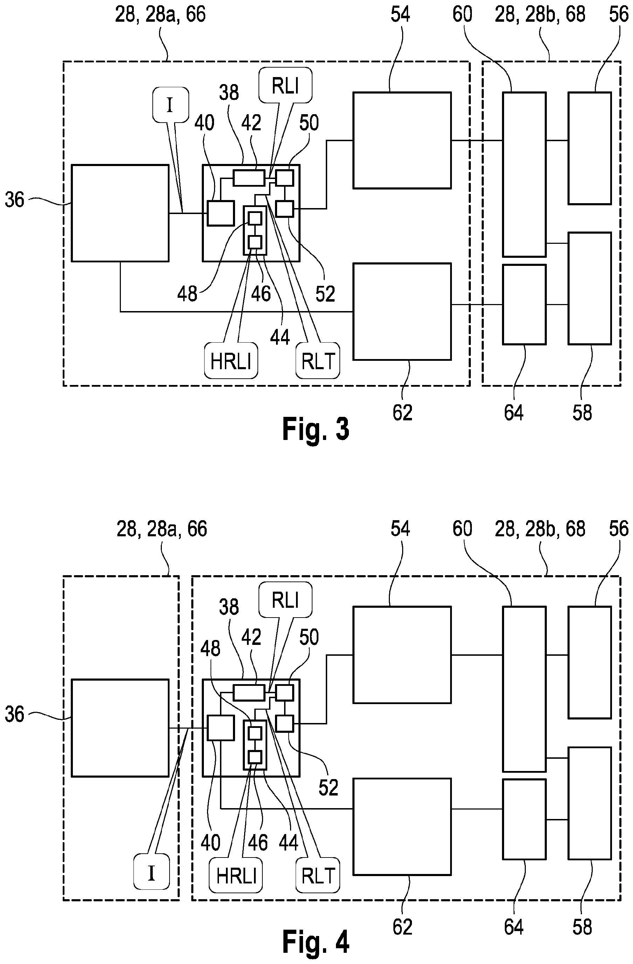

The system 28 is shown in more detail in Figure 3.

The system 28 comprises an image capturing device 36.

The image capturing device 36 is arranged within the first component 28a and the first component 28a is mounted on the seat post 30 such that the image capturing device 26 is facing rearwards.

Consequently, the image capturing device 36 is configured to capture at least one image from a position of the first road user 12. The at least one captured image shows a traffic situation including the second road user 16.

The system 28 also comprises a data processing device 38 and the image capturing device 36 is communicatively connected to the data processing device 38.

In more detail, the data processing device 38 comprises an image receiving interface 40 which is communicatively connected to the image capturing device 36. The image receiving interface 40 is configured to receive images I captured by the image capturing device 36.

The data processing device 38 also comprises an image analysis unit 42.

The image analysis unit 42 is communicatively connected to the image receiving interface 40.

Moreover, the image analysis unit 42 is configured to analyze the received images I and deduct a current risk level indicator RLI describing a current risk of interference between the first road user 12 and the second road user 16. The calculation of the current risk level indicator RLI will be explained in detail further below.

Additionally, the data processing device 38 comprises a current risk level threshold determination unit 44.

The current risk level threshold determination unit 44 comprises a storage unit 46. On the storage unit 46 a set of historic risk level indicators HRLI is stored. Moreover, the current risk level threshold determination unit 44 comprises a processing unit 48 which is communicatively connected to the storage unit 46.

The processing unit 48 of the current risk level threshold determination unit 44 is configured to determine a current risk level threshold RLT as a function of the set of historic risk level indicators. The determination of the current risk level threshold RLT will be explained in more detail further below.

The data processing device 38 further comprises a comparator unit 50 which is communicatively connected to both the image analysis unit 42 and the current risk level threshold determination unit 44.

The comparator unit 50 is configured to compare the current risk level indicator RLI which is provided by the image analysis unit 42 and the current risk level threshold RLT which is provided by current risk level threshold determination unit 44.

The data processing device 38 also comprises a triggering unit 52 which is configured to trigger a notification for the first road user 12 if the current risk level indicator RLI provided by the image analysis unit 42 exceeds the current risk level threshold RLT provided by the current risk level threshold determination unit 44.

To this end, the triggering unit 52 is communicatively connected to the comparator unit 50.

Moreover, the triggering unit 52 or more generally speaking the data processing device 38 is communicatively connected to a notification interface 54.

In the present example, the notification interface 54 forms part of the first component 28a and is configured for sending a notification the second component 28b using wireless data signal.

The system 28 can provide visual and audible notifications.

To this end, the second component 28b comprises an audio output unit 56 and a visual output unit 58, e.g. a screen.

Both the audio output unit 56 and the visual output unit 58 are connected to a notification receiving interface 60 which forms part of the second component 28b.

The notification receiving interface 60 is communicatively connected to the notification interface 54 via a wireless data connection.

The system 28 is also configured to provide a digital rear mirror functionality. This means that the system 28 is configured to provide the images I captured by the image capturing device 36 to the first road user 12.

To this end, the first component 28a comprises an image interface 62.

In the present example, the image interface 62 is communicatively connected to the image capturing device 36 in a direct manner.

It is noted that it is also possible to connect the image interface 62 to the image capturing device 36 via the data processing device 38.

The image interface 62 is communicatively connected to an image receiving interface 64 of the second component 28b via a wireless data connection.

The image receiving interface 64 is communicatively connected to the visual output unit 58 such that an image I can be displayed to the first road user 12.

It is noted that the notification receiving interface 60 and the image receiving interface 64 are represented and explained as separate interfaces. However, it is also conceivable that the notification receiving interface 60 and the image receiving interface 64 are formed as a single, common interface.

In the example shown in Figure 3, the first component 28a is realized as a singular mounting unit 66. All of the building blocks of the first component 28a as described above thus form one integral unit. Since the mounting unit 66 comprises the image capturing device 36, it may be called a camera unit.

The second component 28b is realized as a smart phone 68 which is communicatively connected to the first component 28a via the wireless data connection 34, e.g. via a WiFi connection or a Bluetooth connection.

An alternative configuration of the system 28 is shown in Figure 4. In the following only the differences with respect to the configuration of Figure 3 will be explained. For the remaining aspects, reference is made to the above explanations.

In this configuration, the first component 28a, i.e. the mounting unit 66, only comprises the image capturing device 36.

The remaining building blocks of the system 28 are formed by the second component 28b, i.e. the smart phone 68.

The data processing device 38 and its sub-units is formed by one or more components of the smart phone 68.

Consequently, the notification interface 54, the notification receiving interface 60, the image interface 62 and the image receiving interface 64 are now internal interfaces of the smart phone 68.

A further difference between the configuration of Figure 3 and the configuration of Figure 4 is that the image interface 62 is now connected to the image capturing device 36 via the data processing device 38, in more detail via the image receiving interface 40.

In both the configuration of Figure 3 and the configuration of Figure 4, the data processing device 38 is configured for assessing a risk of interference between the first road user 12 and at second road user 16.

The data processing device 38 is configured to carrying out a method for assessing a risk of interference between the first road user 12 and the second road user 16 being located behind the first road user 12.

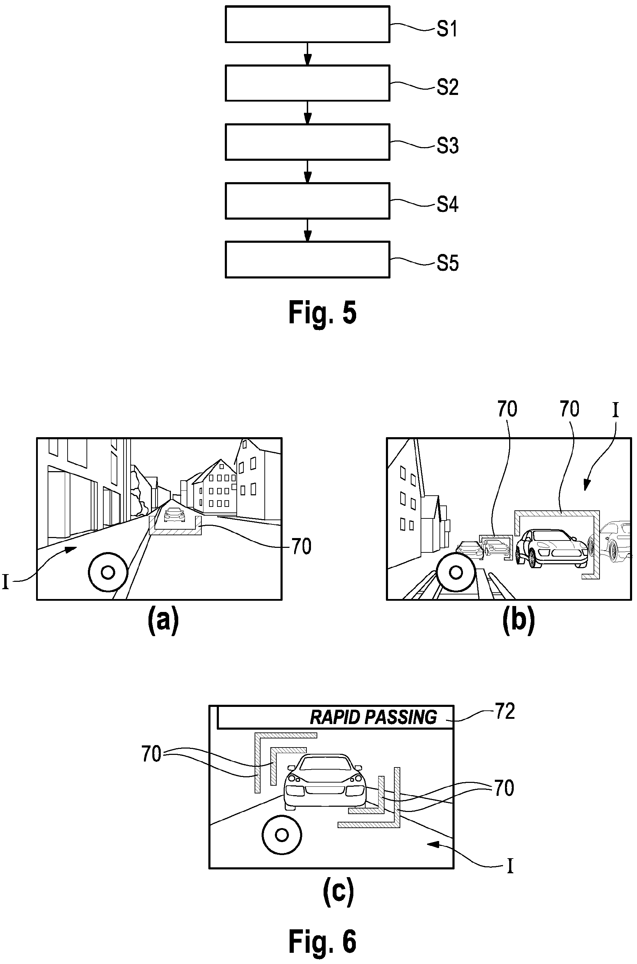

The steps of the method are illustrated in Figure 5.

In a first step S1, at least one image I is received. For the performance of this step, the image receiving interface 40 is used. The images I are captured by the image capturing unit 36.

Preferably, the images I are received in the form or a stream of images I.

As has been explained before, the image I is taken from a position of the first road user 12 and shows a traffic situation including the second road user 16.

In a second step S2, the received images I are analyzed and a current risk level indicator RLI is deducted. The current risk level indicator RLI describes a current risk of interference between the first road user 12 and the second road user 16.

In the present example, the current risk level indicator RLI corresponds to a weighted product of an estimated time to pass TTP, an estimated passing distance PD and an estimated passing speed PS of the second road user 16.

Thus, the current risk level indicator RLI can be calculated as follows, wherein W1, W2 and W3 are weights:

$$RLI = (W1 \cdot TTP) \cdot (W2 \cdot PD) \cdot (W3 \cdot PS)$$

The parameters time to pass TTP, passing distance PD and passing speed PS are deducted from the received images I using a machine vision technique.

In the present example, an optical flow technique is used.

In a first sub-step, the optical flow technique is used to segment the received images I. In the present example with one second road user 16 only, one segment is generated which comprises the second road user 16. The remaining portions of the image I form a second segment which can be designated as background. The latter segment can be ignored for the following calculations.

As has already been explained above, using the optical flow technique in a second sub-step, trajectories for pixels can be generated based on temporally adjacent images I. This is done for the pixels representing the second road user 16. If these trajectories are extrapolated, the time to pass TTP can be estimated. Moreover, the passing distance PD and the passing speed PS of the second road user 16 can be estimated.

The weights W 1, W2, W3 of the weighted product of the time to pass TTP, the passing distance PD and the passing speed PS are determined according to a user setting.

Consequently, as a result of the second step S2, the current risk level indicator RLI is known.

In a third step S3 of the method, a current risk level threshold RLT is determined. To this end, the current risk level threshold determination unit 44 is used.

In the present example, the current risk level threshold RLT corresponds to an average of a set of historic risk level indicators HRLI over a defined time window in the past. The historic risk level indicators HRLI are provided by the storage unit 46 of the current risk level threshold determination unit 44.

In a fourth step S4, the current risk level indicator RLI and the current risk level threshold RLT are compared. This is done by using the comparator unit 50.

If it is found that the current risk level indicator is inferior to the current risk level threshold, the method is abandoned.

However, if the current risk level indicator RLI exceeds the current risk level threshold RLT a fifth step S5 is performed.

In the fifth step S5, a notification for the first road user 12 is triggered.

To this end, the triggering unit 52 is used.

In the present example, both an audible and a visual notification are triggered such that a notification is output by the audio output unit 56 and the visual output unit 58.

The audible notification may comprise a warning sound such as a beep or a sequence of beeps.

Examples of visual notifications are shown in Figure 6.

It is noted that in the examples of Figure 6 the visual warning is integrated into the image I captured by the image capturing device 36 and provided to the first road user 12 via the image interface 62.

As can be seen from Figures 6 (a) to 6 (c), the visual notification can comprise different kinds of highlighting bars 70.

Moreover, the notification can comprise a notification banner 72 as shown in Figure 6 (c).

Preferably, the highlighting bars 70 are colored as a function of a difference of the current risk level indicator RLI and the current risk level threshold RLT. Depending on the magnitude of the difference, the highlighting bars may be colored, e.g. in green, yellow, orange and/or red.

The method also comprises an override functionality.

To this end, a time threshold TT, a distance threshold DT, and a speed threshold ST are defined by a user setting.

In a case in which in step S2 using the optical flow technique, it turns out that at least one of the estimated time to pass TTP is lower than the time threshold TT or if the estimated passing distance PD is lower than the distance threshold DT or if the estimated passing speed PS exceeds the speed threshold ST, a notification is triggered independent from the current risk level threshold RLT.

In this context, the time threshold TT, the distance threshold DT, and the speed threshold ST are defined such that a second road user 16 fulfilling one of the corresponding conditions alone would generate a high risk of interference.

Again, the notification can be audible and visual as has already been explained above.

At any time during the execution of the method, the image I is provided to the first road user 12 via the visual output unit 58. Thus, the first road user can use the visual output unit 58 as a digital rearview mirror.

**List of reference signs**

| | |
|---|---|
| 10 | road |
| 12 | first road user |
| 14 | first travelling direction |
| 16 | second road user |
| 18 | second travelling direction |
| 20 | cyclist |
| 22 | car |
| 24 | bicycle assembly |
| 26 | bicycle |
| 28 | system for assessing a risk of interference between a first road user and a second road user |
| 28a | first component |
| 28b | second component |
| 30 | seat post |
| 32 | handle bar |
| 34 | wireless data connection |
| 36 | image capturing device |
| 38 | data processing device |
| 40 | image receiving interface |
| 42 | analysis unit |
| 44 | current risk level threshold determination unit |
| 46 | storage unit |
| 48 | processing unit |
| 50 | comparator unit |
| 52 | triggering unit |
| 54 | notification interface |
| 56 | audio output unit |
| 58 | visual output unit |
| 60 | notification receiving interface |
| 62 | image interface |
| 64 | image receiving interface |
| 66 | mounting unit |
| 68 | smart phone |
| 70 | highlighting bar |
| 72 | notification banner |

| | |
|---|---|
| DT | distance threshold |
| HRLI | historic risk level indicator |
| I | image |
| PD | passing distance |
| PS | passing speed |
| RLI | current risk level indicator |
| RLT | current risk level threshold |
| S1 | first step |
| S2 | second step |
| S3 | third step |

S4      fourth step
S5      fifth step
ST      speed threshold
TT      time threshold
TTP     time to pass
W1      first weight
W2      second weight
W3      third weight

**Claims**

1. A method for assessing a risk of interference between a first road user (12), and at least one second road user (16) being located behind the first road user (12), the method comprising:

   - receiving at least one image (I) taken from a position of the first road user (12) showing a traffic situation including the at least one second road user (16) (S 1),
   - analyzing the received image (I) and deducting a current risk level indicator, RLI, wherein the current risk level indicator, RLI, describes a current risk of interference between the first road user (12) and the at least one second road user (16) (S2),
   - determining a current risk level threshold, RLT, wherein the current risk level threshold, RLT, is a function of a set of historic risk level indicators, HRLI (S3),
   - comparing the current risk level indicator, RLI, and the current risk level threshold, RLT (S4), and
   - triggering a notification for the first road user (12) if the current risk level indicator, RLI, exceeds the current risk level threshold, RLT (S5).

2. The method of claim 1, wherein analyzing the received image (I) comprises estimating at least one of a time to pass, TTP, the first road user (12), a passing distance, PD, and a passing speed, PS, of the at least one second road user (16) based on the received image (I).

3. The method of claim 2, wherein the risk level indicator, RLI, corresponds to a weighted product or a weighted sum of the estimated time to pass, TTP, the estimated passing distance, PD, and the estimated passing speed, PS.

4. The method according to claim 3, wherein at least one of a first weight (W1) for weighting the estimated time to pass, TTP, a second weight (W2) for weighting the estimated passing distance, PD, and a third weight (W3) for weighting the estimated passing speed, PS, is a function of a driving behavior of the first road user (12) or a user setting.

5. The method of any one of claims 2 to 4, further comprising triggering the notification for the first road user (12) if the estimated time to pass, TTP, is lower than a time threshold, TT, or if the estimated passing distance, PD, is lower than a distance threshold, DT, or if the estimated passing speed, PS, exceeds a speed threshold, ST.

6. The method according to claim 5, wherein at least one of the time threshold, TT, the distance threshold, DT, and the speed threshold, ST, is a function of a driving behavior of the first road user (12) or a user setting.

7. The method of any one of the preceding claims, wherein the current risk level threshold, RLT, corresponds to an average of a set of historic risk level indicators, HRLI, over a defined time window in the past.

8. The method of any one of the preceding claims, wherein the current risk level threshold, RLT, corresponds to an average of a set of historic risk level indicators, HRLI, corresponding to a defined number of past notification events.

9. The method of any one of the preceding claims, wherein analyzing the received image (I) comprises applying a machine vision technique.

10. The method of claim 9, wherein the machine vision technique comprises an optical flow technique.

11. The method of any one of the preceding claims, further comprising providing the received image (I) to the first road user (12).

**12.** A data processing device (38) for assessing a risk of interference between a first road user (12), and at least one second road user (16) being located behind the first road user (12), comprising means configured for carrying out the method of any one of the preceding claims.

**13.** A system (28) for assessing a risk of interference between a first road user (12), especially a cyclist (20), and at least one second road user (16) being located behind the first road user (12), the system (28) comprising:

a data processing device (38) according to claim 12,
an image capturing device (36) being configured to capture at least one image (I) from a position of the first road user (12) showing a traffic situation including the at least one second road user (16), and
a notification interface (54) configured to provide a notification for the first road user (12),
wherein the image capturing device (36) is communicatively connected to the data processing device (38) and wherein the notification interface (54) is communicatively connected to the data processing device (38).

**14.** The system of claim 13, further comprising an image interface (62) being configured for providing an image (I) captured by the image capturing device (36) to the first road user (12), wherein the image interface (62) is communicatively connected to at least one of the image capturing device (36) and the data processing device (38).

**15.** Bicycle assembly (24) comprising a bicycle (26) and a system (28) according to claim 13 or claim 14, wherein the system (28) is mounted on the bicycle (26) such that the image capturing device (36) is facing rearwards.


**Patentansprüche**

**1.** Verfahren zum Beurteilen eines Risikos einer Behinderung zwischen einem ersten Verkehrsteilnehmer (12) und mindestens einem zweiten Verkehrsteilnehmer (16), der sich hinter dem ersten Verkehrsteilnehmer (12) befindet, wobei das Verfahren umfasst:

- Empfangen mindestens eines Bildes (I), das von einer Position des ersten Verkehrsteilnehmers (12) aus aufgenommen wurde und eine Verkehrssituation zeigt, die den mindestens einen zweiten Verkehrsteilnehmer (16) enthält (S1),
- Analysieren des empfangenen Bildes (I) und Ableiten eines Indikators (RLI) eines momentanen Risikogrades, wobei der Indikator (RLI) eines momentanen Risikogrades ein momentanes Risiko einer Behinderung zwischen dem ersten Verkehrsteilnehmer (12) und dem mindestens einen zweiten Verkehrsteilnehmer (16) beschreibt (S2),
- Bestimmen einer Schwelle (RLT) eines momentanen Risikogrades, wobei die Schwelle (RLT) eines momentanen Risikogrades eine Funktion eines Satzes Indikatoren (HRLI) eines historischen Risikogrades ist (S3),
- Vergleichen des Indikators (RLI) eines momentanen Risikogrades mit der Schwelle (RLT) eines momentanen Risikogrades (S4), und
- Auslösen einer Benachrichtigung an den ersten Verkehrsteilnehmer (12), falls der Indikator (RLI) eines momentanen Risikogrades die Schwelle (RLT) eines momentanen Risikogrades überschreitet (S5).

**2.** Verfahren nach Anspruch 1, wobei das Analysieren des empfangenen Bildes (I) das Schätzen mindestens eines von einer Zeit zum Überholen (TTP) des ersten Verkehrsteilnehmers, einer Überholdistanz (PD) und einer Überholgeschwindigkeit (PS) des mindestens einen zweiten Verkehrsteilnehmers (16) auf der Grundlage des empfangenen Bildes (I) umfasst.

**3.** Verfahren nach Anspruch 2, wobei der Risikograd-Indikator (RLI) einem gewichteten Produkt oder einer gewichteten Summe aus der geschätzten Zeit zum Überholen (TTP), dem geschätzten Überholabstand (PD) und der geschätzten Überholgeschwindigkeit (PS) entspricht.

**4.** Verfahren nach Anspruch 3, wobei mindestens eines von einem ersten Gewicht (W1) zum Gewichten der geschätzten Zeit zum Überholen (TTP), einem zweiten Gewicht (W2) zum Gewichten des geschätzten Überholabstands (PD) und einem dritten Gewicht (W3) zum Gewichten der geschätzten Überholgeschwindigkeit (PS) eine Funktion eines Fahrverhaltens des ersten Verkehrsteilnehmers (12) oder einer Benutzereinstellung ist.

**5.** Verfahren nach einem der Ansprüche 2 bis 4, umfassend des Weiteren das Auslösen der Benachrichtigung an den ersten Verkehrsteilnehmer (12), falls die geschätzte Zeit zum Überholen (TTP) niedriger als eine Zeitschwelle (TT) ist oder falls der geschätzte Überholabstand (PD) niedriger als eine Abstandsschwelle (DT) ist oder falls die geschätzte Überholgeschwindigkeit (PS) eine Geschwindigkeitsschwelle (ST) überschreitet.

6. Verfahren nach Anspruch 5, wobei mindestens eines von der Zeitschwelle (TT), der Abstandsschwelle (DT) und der Geschwindigkeitsschwelle (ST) eine Funktion eines Fahrverhaltens des ersten Verkehrsteilnehmers (12) oder einer Benutzereinstellung ist.

7. Verfahren nach einem der vorangehenden Ansprüche, wobei die Schwelle (RLT) eines momentanen Risikogrades einem Durchschnitt eines Satzes Indikatoren (HRLI) eines historischen Risikogrades über ein definiertes Zeitfenster in der Vergangenheit entspricht.

8. Verfahren nach einem der vorangehenden Ansprüche, wobei die Schwelle (RLT) eines momentanen Risikogrades einem Durchschnitt eines Satzes Indikatoren (HRLI) eines historischen Risikogrades entspricht, die einer definierten Anzahl vergangener Benachrichtigungsereignisse entsprechen.

9. Verfahren nach einem der vorangehenden Ansprüche, wobei das Analysieren des empfangenen Bildes (I) das Anwenden einer maschinellen Bildverarbeitungstechnik umfasst.

10. Verfahren nach Anspruch 9, wobei die maschinelle Bildverarbeitungstechnik eine Optische-Fluss-Technik umfasst.

11. Verfahren nach einem der vorangehenden Ansprüche, umfassend des Weiteren, das empfangene Bild (I) an den ersten Verkehrsteilnehmer (12) zu übermitteln.

12. Datenverarbeitungsvorrichtung (38) zum Beurteilen eines Risikos einer Behinderung zwischen einem ersten Verkehrsteilnehmer (12) und mindestens einem zweiten Verkehrsteilnehmer (16), der sich hinter dem ersten Verkehrsteilnehmer (12) befindet, umfassend ein Mittel, das zum Ausführen des Verfahrens nach einem der vorangehenden Ansprüche eingerichtet ist.

13. System (28) zum Beurteilen eines Risikos einer Behinderung zwischen einem ersten Verkehrsteilnehmer (12), insbesondere einem Radfahrer (20), und mindestens einem zweiten Verkehrsteilnehmer (16), der sich hinter dem ersten Verkehrsteilnehmer (12) befindet, wobei das System (28) umfasst:

   eine Datenverarbeitungsvorrichtung (38) nach Anspruch 12,
   eine Bildaufnahmevorrichtung (36), die dafür eingerichtet ist, mindestens ein Bild (I) von einer Position des ersten Verkehrsteilnehmers (12) aus aufzunehmen, das eine Verkehrssituation zeigt, die den mindestens einen zweiten Verkehrsteilnehmer (16) enthält, und
   eine Benachrichtigungsschnittstelle (54), die dafür eingerichtet ist, eine Benachrichtigung an den ersten Verkehrsteilnehmer (12) zu übermitteln,
   wobei die Bildaufnahmevorrichtung (36) mit der Datenverarbeitungsvorrichtung (38) kommunikativ verbunden ist und wobei die Benachrichtigungsschnittstelle (54) mit der Datenverarbeitungsvorrichtung (38) kommunikativ verbunden ist.

14. System nach Anspruch 13, umfassend des Weiteren eine Bildschnittstelle (62), die dafür eingerichtet ist, an den ersten Verkehrsteilnehmer (12) ein durch die Bildaufnahmevorrichtung (36) aufgenommenes Bild (I) zu übermitteln, wobei die Bildschnittstelle (62) mit mindestens einer der Bildaufnahmevorrichtung (36) und der Datenverarbeitungsvorrichtung (38) kommunikativ verbunden ist.

15. Fahrradanordnung (24), umfassend ein Fahrrad (26) und ein System (28) nach Anspruch 13 oder Anspruch 14, wobei das System (28) so an dem Fahrrad (26) montiert ist, dass die Bildaufnahmevorrichtung (36) nach hinten weist.

## Revendications

1. Procédé d'évaluation d'un risque d'interférence entre un premier usager de la route (12), et au moins un deuxième usager de la route (16) qui est situé derrière le premier usager de la route (12), le procédé comprenant :

   - la réception d'au moins une image (I) prise à partir d'une position du premier usager de la route (12) montrant une situation de circulation incluant l'au moins un deuxième usager de la route (16) (S1),

- l'analyse de l'image reçue (I) et la déduction d'un indicateur de niveau de risque, RLI, actuel, dans lequel l'indicateur de niveau de risque, RLI, actuel décrit un risque actuel d'interférence entre le premier usager de la route (12) et l'au moins un deuxième usager de la route (16) (S2),

- la détermination d'un seuil de niveau de risque, RLT, actuel, dans lequel le seuil de niveau de risque, RLT, actuel est fonction d'un ensemble d'indicateurs de niveau de risque historique, HRLI (S3),

- la comparaison de l'indicateur de niveau de risque, RLI, actuel et du seuil de niveau de risque, RLT, actuel (S4), et

- le déclenchement d'une notification pour le premier usager de la route (12) si l'indicateur de niveau de risque, RLI, actuel dépasse le seuil de niveau de risque, RLT, actuel (S5).

2. Procédé selon la revendication 1, dans lequel l'analyse de l'image (I) reçue comprend l'estimation d'au moins l'un parmi un temps de dépassement, TTP, du premier usager de la route (12), une distance de dépassement, PD, et une vitesse de dépassement, PS, de l'au moins un deuxième usager de la route (16) sur la base de l'image (I) reçue.

3. Procédé selon la revendication 2, dans lequel l'indicateur de niveau de risque, RLI, correspond à un produit pondéré ou une somme pondérée du temps de dépassement, TTP, estimé, de la distance de dépassement, PD, estimée, et de la vitesse de dépassement, PS, estimée.

4. Procédé selon la revendication 3, dans lequel au moins l'un parmi un premier poids (W1) pour pondérer le temps de dépassement, TTP, estimé, un deuxième poids (W2) pour pondérer la distance de dépassement, PD, estimée, et un troisième poids (W3) pour pondérer la vitesse de dépassement, PS, estimée est fonction d'un comportement de conduite du premier usager de la route (12) ou d'un paramétrage de l'utilisateur.

5. Procédé selon l'une quelconque des revendications 2 à 4, comprenant en outre le déclenchement de la notification pour le premier usager de la route (12) si le temps de dépassement, TTP, estimé est inférieur à un seuil de temps, TT, ou si la distance de dépassement, PD, estimée est inférieure à un seuil de distance, DT, ou si la vitesse de dépassement, PS, estimée dépasse un seuil de vitesse, ST.

6. Procédé selon la revendication 5, dans lequel au moins l'un parmi le seuil de temps, TT, le seuil de distance, DT, et le seuil de vitesse, ST, est fonction d'un comportement de conduite du premier usager de la route (12) ou d'un paramétrage de l'utilisateur.

7. Procédé selon l'une quelconque des revendications précédentes, dans lequel le seuil de niveau de risque, RLT, actuel correspond à une moyenne d'un ensemble d'indicateurs de niveau de risque historiques, HRLI, sur une fenêtre temporelle définie dans le passé.

8. Procédé selon l'une quelconque des revendications précédentes, dans lequel le seuil de niveau de risque, RLT, actuel correspond à une moyenne d'un ensemble d'indicateurs de niveau de risque historiques, HRLI, correspondant à un nombre défini d'événements de notification passés.

9. Procédé selon l'une quelconque des revendications précédentes, dans lequel l'analyse de l'image (I) reçue comprend l'application d'une technique de vision artificielle.

10. Procédé selon la revendication 9, dans lequel la technique de vision artificielle comprend une technique de flux optique.

11. Procédé selon l'une quelconque des revendications précédentes, comprenant en outre la fourniture de l'image (I) reçue au premier usager de la route (12).

12. Dispositif de traitement de données (38) permettant d'évaluer un risque d'interférence entre un premier usager de la route (12), et au moins un deuxième usager de la route (16) qui est situé derrière le premier usager de la route (12), comprenant des moyens conçus pour effectuer le procédé selon l'une quelconque des revendications précédentes.

13. Système (28) d'évaluation d'un risque d'interférence entre un premier usager de la route (12), notamment un cycliste (20), et au moins un deuxième usager de la route (16) qui est situé derrière le premier usager de la route (12), le système (28) comprenant :

un dispositif de traitement de données (38) selon la revendication 12,
un dispositif de capture d'image (36) qui est conçu pour capturer au moins une image (I) à partir d'une position du premier usager de la route (12) montrant une situation de circulation incluant l'au moins un deuxième usager de la route (16), et
une interface de notification (54) conçue pour fournir une notification au premier usager de la route (12),
dans lequel le dispositif de capture d'image (36) est relié en communication au dispositif de traitement de données (38) et dans lequel l'interface de notification (54) est reliée en communication au dispositif de traitement de données (38).

14. Système selon la revendication 13, comprenant en outre une interface d'image (62) qui est conçue pour fournir une image (I) capturée par le dispositif de capture d'image (36) au premier usager de la route (12), dans lequel l'interface d'image (62) est reliée en communication à au moins l'un parmi le dispositif de capture d'image (36) et le dispositif de traitement de données (38).

15. Ensemble bicyclette (24) comprenant une bicyclette (26) et un système (28) selon la revendication 13 ou la revendication 14, dans lequel le système (28) est monté sur la bicyclette (26) de telle sorte que le dispositif de capture d'image (36) est orienté vers l'arrière.

**Fig. 1**

**Fig. 2**

**Fig. 3**

**Fig. 4**

Fig. 5

(a)

(b)

RAPID PASSING — 72

(c)

Fig. 6

**EP 4 254 385 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210012663 A1
- US 2015228066 A1
- US 2019210681 A1
- US 2022073068 A1